# EUROPEAN PATENT SPECIFICATION

(11) **EP 4 589 487 B1**
(45) Date of publication and mention of the grant of the patent: **30.09.2026**
(21) Application number: 22967831.3
(22) Date of filing: 07.12.2022
(51) Int. Cl.: G06N 10/60, G06N 10/70, G06N 10/20

(54) **APPROXIMATE QUANTUM FOURIER TRANSFORM DEVICE, APPROXIMATE QUANTUM FOURIER TRANSFORM METHOD, AND APPROXIMATE QUANTUM FOURIER TRANSFORM PROGRAM**
VORRICHTUNG ZUR UNGEFÄHREN QUANTENFOURIERTRANSFORMATION, VERFAHREN ZUR UNGEFÄHREN QUANTENFOURIERTRANSFORMATION UND PROGRAMM ZUR UNGEFÄHREN QUANTENFOURIERTRANSFORMATION
DISPOSITIF DE TRANSFORMÉE DE FOURIER QUANTIQUE APPROXIMATIVE, PROCÉDÉ DE TRANSFORMÉE DE FOURIER QUANTIQUE APPROXIMATIVE ET PROGRAMME DE TRANSFORMÉE DE FOURIER QUANTIQUE APPROXIMATIVE

(43) Date of publication of application: 23.07.2025
(73) Proprietor: MITSUBISHI ELECTRIC CORPORATION, Chiyoda-ku Tokyo 100-8310 (JP)
(72) Inventor: OONISHI, Kento, Tokyo 100-8310 (JP)
(74) Representative: Pfenning, Meinig & Partner mbB
(86) International application number: PCT/JP2022/045128
(87) International publication number: WO 2024/121981

(56) References cited:
- CN-A- 114 282 676
- JP-A- 2008 052 365
- JP-A- 2008 052 365
- US-A1- 2022 114 471
- US-B2- 11 367 014
- BYEONGYONG PARK ET AL: "Reducing the complexity of the Quantum Fourier Transform implementation", ARXIV.ORG, CORNELL UNIVERSITY LIBRARY, 201 OLIN LIBRARY CORNELL UNIVERSITY ITHACA, NY 14853, 15 March 2022 (2022-03-15), XP091190733
- CHUANG I L ET AL: "Quantum bit regeneration", PHYSICAL REVIEW LETTERS, AMERICAN PHYSICAL SOCIETY, US, vol. 76, no. 22, 27 May 1996 (1996-05-27), pages 4281 - 4284, XP002387595, ISSN: 0031-9007

## Description

### Technical Field

The present invention relates to a technology of performing approximate quantum Fourier transform.

### Background Art

Quantum Fourier transform is an essential operation that gives quantum computers an advantage over classical computers. The quantum Fourier transform will be hereinafter referred to as the QFT. The QFT is used for high-speed prime factorization and signal processing.

Conventionally, high-speed approximate QFT has been performed by omitting operations that have only a small influence on a calculation result (see Patent Literature 1). However, in recent years, research into quantum error correction to realize large-scale quantum computing has developed. As a result, it has become clear that a quantum phase gate used in approximate QFT requires a much longer calculation time than in a conventional case.

In light of this fact, approximate QFTs that take quantum error correction into account have been proposed in recent years (see Non-Patent Literatures 1 and 2).

Non-Patent Literatures 1 and 2 propose methods for improving efficiency of approximate QFTs by reducing a count of T gates that require a high calculation cost, in the Clifford+T gate model which is becoming mainstream in quantum computing. BYEONGYONG PARK ET AL: "Reducing the complexity of the Quantum Fourier Transform implementation", ARXIV.ORG, CORNELL UNIVERSITY LIBRARY, 201 OLIN LIBRARY CORNELL UNIVERSITY ITHACA, NY 14853, 15 March 2022, discloses an approximation method for implementing the Quantum Fourier Transform (QFT) that halves both T-count and T-depth compared with the best known approximate QFT. By decomposing QFT into Rz and CNOT layers, manipulating Rz gates, and applying a Karnaugh-map-based reduction.

CHUANG I L ET AL: "Quantum bit regeneration", PHYSICAL REVIEW LETTERS, AMERICAN PHYSICAL SOCIETY, US, vol. 76, no. 22, 27 May 1996 (1996-05-27), pages 4281-4284 discloses a method for quantum bit regeneration to mitigate amplitude-damping loss.

### Citation List

### Patent Literature

Patent Literature 1: JP 2008-52365 A

### Non-Patent Literature

Non-Patent Literature 1: R. Rines and I. Chuang, High Performance Quantum Modular Multipliers, eprint arXiv, 1801.01081, January 3rd, 2018.
Non-Patent Literature 2: Y. Nam, Y. Su, and D. Maslov, Approximate Quantum Fourier Transform with O(n log(n)) T Gates, Npj Quantum Information, 6(26), March 13th, 2020. First online as eprint arXiv 1803.04933, March 13th, 2018.

### Summary of Invention

### Technical Problem

In approximate QFTs proposed in Non-Patent Literatures 1 and 2, individual gates constituting approximate QFT are executed one by one. This results in a long calculation time and is thus inefficient.

The present disclosure has as its objective to make it possible to reduce the calculation time of approximate QFT.

### Solution to Problem

The invention is defined by the appended set of claims.

### Advantageous Effects of Invention

In the present disclosure, the quantum state stored in a quantum state storage unit is called and used to convert a state of a quantum bit. This allows execution of an approximate QFT with a reduced calculation time.

### Brief Description of Drawings

Fig. 1 is a configuration diagram of an approximate quantum Fourier transform device 10 according to Embodiment 1.
Fig. 2 is a flowchart illustrating an operation outline of the approximate quantum Fourier transform device 10 according to Embodiment 1.
Fig. 3 is a flowchart illustrating detailed operation of the approximate quantum Fourier transform device 10 according to Embodiment 1.
Fig. 4 is a flowchart of a pre-process according to Embodiment 1.
Fig. 5 is a flowchart of a real calculation process according to Embodiment 1.
Fig. 6 is a flowchart of a post-process according to Embodiment 1.
Fig. 7 is a configuration diagram of an approximate quantum Fourier transform device 10 according to Modification 1.

### Description of Embodiments

### Embodiment 1.

### *** Description of Configuration ***

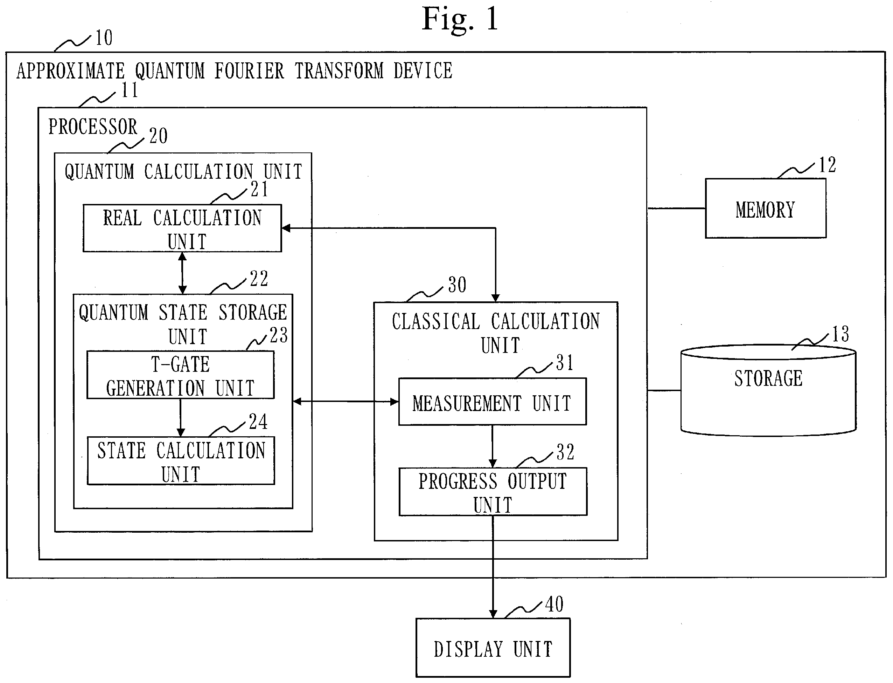

A configuration of an approximate quantum Fourier transform device 10 according to Embodiment 1 will be described with referring to Fig. 1.

The approximate quantum Fourier transform device 10 is a computer.

The approximate quantum Fourier transform device 10 is provided with hardware devices which are a processor 11, a memory 12, and a storage 13. The processor 11 is connected to the other hardware devices via a signal line and controls the other hardware devices. The approximate quantum Fourier transform device 10 is connected to a display unit 40.

The processor 11 is an IC that performs processing. Note that IC is an abbreviation for Integrated Circuit. Specific examples of the processor 11 are a CPU, a DSP, and a GPU. Note that CPU is an abbreviation for Central Processing Unit, DSP for Digital Signal Processor, and GPU for Graphics Processing Unit.

The memory 12 is a storage device that stores data temporarily. Specific examples of the memory 12 are an SRAM and a DRAM. Note that SRAM is an abbreviation for Static Random-Access Memory, and DRAM for Dynamic Random-Access Memory.

The storage 13 is a storage device to keep data. A specific example of the storage 13 is an HDD. Note that HDD is an abbreviation for Hard Disk Drive. The storage 13 may be a portable recording medium such as an SD (registered trademark) memory card, a CompactFlash (registered trademark), a NAND flash, a flexible disk, an optical disk, a compact disk, a Blu-ray (registered trademark) disc, and a DVD. Note that SD is an abbreviation for Secure Digital, and DVD for Digital Versatile Disk.

The approximate quantum Fourier transform device 10 is provided with, as functional constituent elements, a quantum calculation unit 20 and a classical calculation unit 30. The quantum calculation unit 20 is provided with a real calculation unit 21 and a quantum state storage unit 22. The quantum state storage unit 22 is provided with a T-gate generation unit 23 and a state calculation unit 24. The classical calculation unit 30 is provided with a measurement unit 31 and a progress output unit 32. The functions of the individual functional constituent elements of the approximate quantum Fourier transform device 10 are implemented by software.

The storage 13 stores a program that implements the functions of the functional constituent elements of the approximate quantum Fourier transform device 10. This program is loaded to the memory 12 by the processor 11 and executed by the processor 11. The functions of the functional constituent elements of the approximate quantum Fourier transform device 10 are thus implemented.

Fig. 1 illustrates, as the processor 11, only one. However, there may be a plurality of processors 11. The plurality of processors 11 may corporate with each other to execute the program which implements the individual functions.

### *** Description of Operation ***

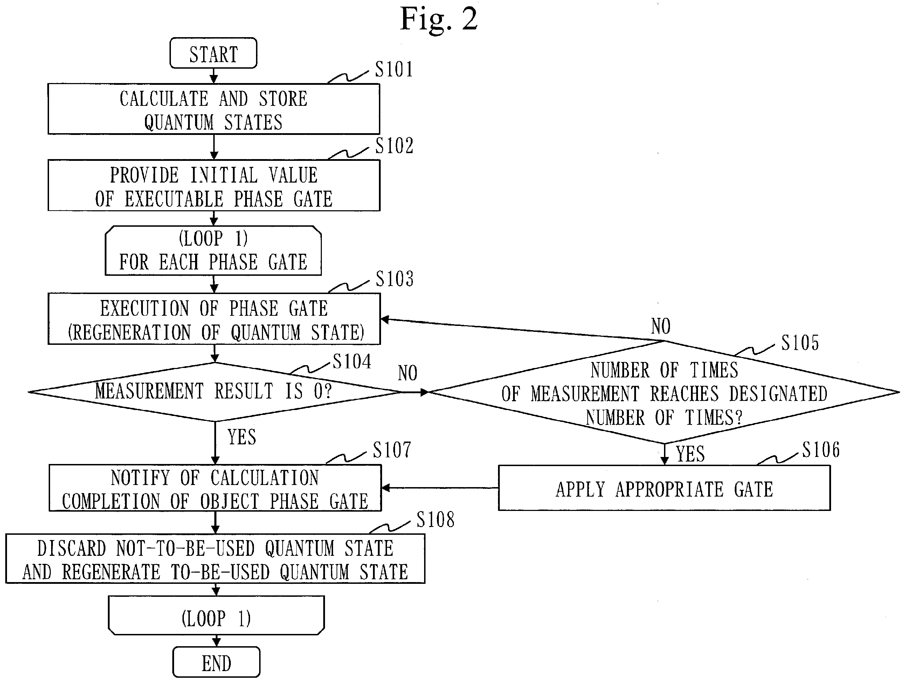

An operation of the approximate quantum Fourier transform device 10 according to Embodiment 1 will be described with referring to Figs. 2 to 6.

An operation procedure of the approximate quantum Fourier transform device 10 according to Embodiment 1 corresponds to an approximate quantum Fourier transform method according to Embodiment 1. A program that implements the operation of the approximate quantum Fourier transform device 10 according to Embodiment 1 corresponds to an approximate quantum Fourier transform program according to Embodiment 1.

An operation outline of the approximate quantum Fourier transform device 10 according to Embodiment 1 will be described with referring to Fig. 2.

### (Step S101: Quantum State Storing Process)

The quantum state storage unit 22 calculates and stores a plurality of quantum states in advance.

Specifically, the T-gate generation unit 23 generates a T gate. The state calculation unit 24 uses the T gate generated by the T-gate generation unit 23 to generate a quantum state required to execute a phase gate the real calculation unit 21 uses .

When using the T gate, the state calculation unit 24 performs correction using a measurement result of the measurement unit 31. Specifically, first, the state calculation unit 24 applies a control NOT gate. The control bit of the control NOT gate is a quantum bit being a T-gate application object. The target bit of the control NOT gate is a quantum bit generated by the T-gate generation unit 23. Next, the state calculation unit 24 causes the measurement unit 31 to measure the quantum bit of the T-gate generation unit 23. If the measurement result is 0, the state calculation unit 24 ends the process. If the measurement result is 1, the state calculation unit 24 applies an S gate to the quantum bit being the T-gate application object.

A T gate generated by the T-gate generation unit 23 is used in the following processes as well when the state calculation unit 24 generates or regenerates a quantum state.

### (Step S102: Initial Value Assigning Process)

The real calculation unit 21 provides an initial value of an executable phase gate.

Subsequently, in loop 1 including step S103 through step S108, the real calculation unit 21 executes approximate QFT. At this time, the real calculation unit 21 calls a required quantum state from the plurality of quantum states stored in the quantum state storage unit 22 and executes each phase gate. The real calculation unit 21 uses an execution situation of each phase gate to grasp the executable phase gate.

In loop 1, processing is executed on, as an object phase gate, an executable phase gate that is not completed yet, until processing is completed for every phase gate.

### (Step S103: Gate Execution Process)

The real calculation unit 21 executes the object phase gate. At this time, the real calculation unit 21 calls the required quantum state from the quantum state storage unit 22. Then, the real calculation unit 21 causes the measurement unit 31 to measure classical bits.

At this time point, the quantum state called from the quantum state storage unit 22 decays. The quantum state storage unit 22 starts regenerating the quantum state that has been used. In step S103, merely quantum state regeneration is started. The processing is shifted to step S104 without waiting for completion of quantum state generation.

### (Step S104: Measurement Result Judging Process)

The real calculation unit 21 uses the measurement result of the measurement unit 31 to judge whether or not further phase gate application is required.

Specifically, the real calculation unit 21 judges whether or not the measurement result is 0. If the measurement result is 0, the real calculation unit 21 judges that the object phase gate has been applied. Then, the real calculation unit 21 ends gate application, and shifts the processing to step S107. If the measurement result is not 0, the real calculation unit 21 judges that application of the object phase gate is not completed yet. Then, the real calculation unit 21 shifts the processing to step S105 for further gate application.

### (Step S105: Number of Times Judging Process)

The real calculation unit 21 judges whether or not a number of times of measurement carried out in step S103 reaches a designated number of times. Assume that the designated number of times has been set in advance.

If the number of times of measurement reaches the designated number of times, the real calculation unit 21 shifts the processing to step S106. If the number of times of measurement does not reach the designated number of times, the real calculation unit 21 shifts the processing back to step S103.

### (step S106: Gate Application Process)

The real calculation unit 21 applies an appropriate gate and shifts the processing to step S107.

### (Step S107: Progress Output Process)

The real calculation unit 21 outputs calculation completion of the object phase gate to the progress output unit 32. Upon reception of the output of calculation completion, the progress output unit 32 displays a calculation completed portion of the approximate QFT to the display unit 300.

At this time, along with calculation completion of the object phase gate, the real calculation unit 21 updates information on the executable phase gate.

### (Step S108: Quantum State Update Process)

The quantum state storage unit 22 discards, among the plurality of stored quantum states, a quantum state that will not be used, and starts regeneration of a quantum state to be used later. Each quantum state stored in the quantum state storage unit 22 does not have quantum entanglement. Therefore, the quantum state storage unit 22 causes the measurement unit 31 to perform measurement and then restores the measurement unit 31 to an initial state. After that, the quantum state storage unit 22 starts quantum state regeneration.

In step S108, merely quantum state regeneration is started, in the same manner as in step S103. The processing is shifted to step S104 without waiting for completion of quantum state generation.

Next, matters as prerequisite for the operation of the approximate quantum Fourier transform device 10 according to Embodiment 1 will be explained.

In the following explanation, a count of quantum bits of a quantum state to be converted by the approximate QFT is expressed by n, and the quantum bit numbers are expressed as 1, 2, ..., n.

In the following explanation, an approximation accuracy ε of the approximate QFT will be described by assuming ε ~ n^{-a} (a is a certain constant). An approximation accuracy that is more accurate is also applicable. Non-approximate ordinary QFT is executed in a situation where ε = 2⁻ⁿ. An approximation accuracy more accurate than this is unnecessary. Hence, a maximum accuracy of the approximation accuracy is ε = 2^{- n}.

In the following explanation, a value log(1/ε) is used. This originally signifies Expression 11 and is intended to express a minimum integer not less than log(1/ε). However, for the sake of simplicity, this minimum integer is described as log(1/ε). $\left⌈log\left(1/ε\right)\right⌉$

In the following explanation, regarding a natural number j, an Rⱼ gate is as indicated by Expression 12. An Rⱼ⁻¹ gate being an inverse matrix of the Rⱼ gate is as indicated by Expression 13. Here, a phase gate signifies a set of gates expressed by a product of the Rⱼ gate and the Rⱼ⁻¹ gate. ${R}_{j} = \left[\begin{matrix}1 & 0 \\ 0 & exp \left(2πi/{2}^{j}\right)\end{matrix}\right]$ ${R}_{j}^{- 1} = \left[\begin{matrix}1 & 0 \\ 0 & exp \left(-2πi/{2}^{j}\right)\end{matrix}\right]$

The quantum states stored by the quantum state storage unit 22 will be explained.

The quantum states stored by the quantum state storage unit 22 include three types of quantum states: (1) a pre-process state; (2) a real calculation state; and (3) a post-process state, in accordance with an individual quantum bit. These quantum states are used in an order of (1) to (3).

Specifically, each quantum bit transitions between two states in turn: (a) a state where computation processing is performed on the quantum bit as a target bit of control computation; and (b) a state where computation processing is performed on the quantum bit as a control bit of control computation. These two states are separated by an H gate (Hadamard gate) indicated by Expression 14. $H = \frac{1}{\sqrt{2}} \left[\begin{matrix}1 & 1 \\ 1 & - 1\end{matrix}\right]$

At this time, the quantum states (1) to (3) are used in the following situations respectively. First, (1) the pre-process state is used to correct phase displacement of when the processing of the computation state (a) is ended. (2) The real calculation state is used in the processing of the computation state (b). (3) The post-process state is used to correct phase displacement of when the processing of the computation state (b) is ended.

Specifically, the quantum states stored by the quantum state storage unit 22 are as follows.

### (1) Pre-Process State

The quantum state storage unit 22 stores a quantum state corresponding to the R₂Rⱼ+₁⁻¹ gate when the quantum bit number j satisfies 2 ≤ j ≤ log(1/ε); and in other cases, stores a quantum state corresponding to the R₂R_{log(1/ε)+1}⁻¹ gate. For the R₂Rⱼ⁻¹ gate, j - 2 of quantum states indicated in Expression 15 are stored. $\begin{matrix}\left|0\right〉 + exp \left(\frac{2 π i}{{2}^{5 - j}}-\frac{2 π i}{{2}^{3}}\right) \left|1,\right〉 \left|0\right〉 + exp \left(\frac{2 π i}{{2}^{6 - j}}-\frac{2 π i}{{2}^{4}}\right) \left|1\right〉 , … , \left|0\right〉 \\ + exp \left(\frac{2 π i}{{2}^{2}}-\frac{2 π i}{{2}^{j}}\right) \left|1\right〉\end{matrix}$

### (2) Real Calculation State

The quantum state storage unit 22 stores quantum states corresponding to the R₃⁻¹, R₄⁻¹, ..., R_{log(1/ε)+1}⁻¹ gates when the quantum bit number j satisfies 1 ≤ j ≤ n - log(1/ε) + 1; and in other cases, stores quantum states corresponding to the R₃⁻¹, R₄⁻¹, ..., Rₙ₋ⱼ₊₂⁻¹ gates. For the Rⱼ⁻¹ gate, j - 2 of quantum states indicated in Expression 16 are stored. $\begin{matrix}\left|0\right〉 + exp \left(-2πi/{2}^{3}\right) \left|1,\right〉 \left|0\right〉 + exp \left(-2πi/{2}^{4}\right) \left|1\right〉 , … , \left|0\right〉 \\ + exp \left(-2πi/{2}^{j}\right) \left|1\right〉\end{matrix}$

### (3) Post-Process State

The quantum state storage unit 22 stores a quantum state corresponding to the R₂R_{log(1/ε)+1}⁻¹ gate when the quantum bit number j satisfies 1 ≤ j ≤ n - log(1/ε) + 1; and in other cases, stores a quantum state corresponding to the R₂Rₙ₋ⱼ₊₂⁻¹ gate.

The quantum state storage unit 22 does not store all of the quantum states concerning (1) to (3) stated above. The quantum state storage unit 22 stores only some quantum states and makes them immediately executable. Then, the quantum state storage unit 22 regenerates the quantum states which were used by the real calculation part 110 and decayed, thereby reducing a count of quantum bits to be used.

A time needed to regenerate a quantum state is about 3d_{T}log(1/ε) steps where d_{T} steps is a calculation time needed to generate a T gate. Note that here, "step" is a total time of a time taken for executing a control NOT gate once and a time taken for executing measurement of the quantum state once, or a calculation time equal to the total time. Hence, as the phase gates that should be made immediately executable, phase gates that are required for the 3d_{T}log(1/ε) steps suffice.

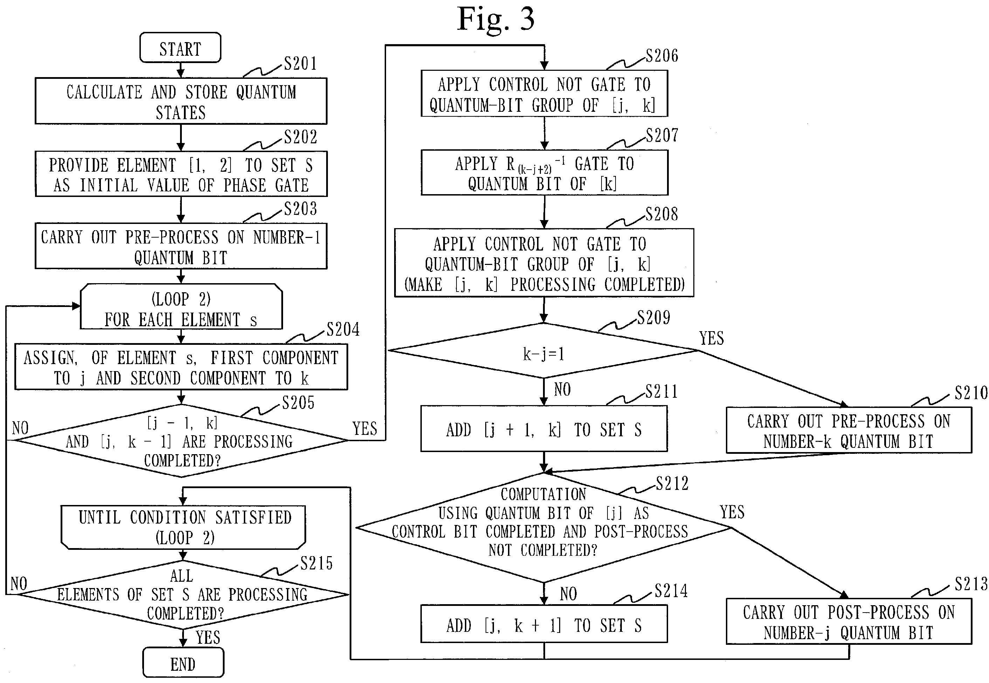

Regarding the quantum states (1) to (3), a count of quantum states to be stored actually will be briefly explained. A specific use schedule will be described later with referring to Fig. 3. In the following, where the count of quantum states is described with "about", "about" signifies that a sufficiently small term is ignored and a major term is picked out.

### (1) Pre-Process State

One R₂Rⱼ⁻¹ gate is consumed within at least a 2-step an interval . Accordingly, a count of R₂Rⱼ⁻¹ gates used in 1 step can be estimated to be no more than 1/2. Therefore, if quantum states to be used by the R₂Rⱼ⁻¹ gates are stored for about 3/2d_{T}log(1/ε) times of operation, the pre-process state is immediately executable. Namely, the count of quantum states that should be prepared is about 3/2d_{T}(log(1/ε))².

### (2) Real Calculation State

Each single Rⱼ⁻¹ gate is consumed within at least a 2-step interval. Accordingly, a count of Rⱼ⁻¹ gates used in 1 step can be estimated to be no more than 1/2. Totaling all counts of quantum states required by R₃⁻¹, R₄⁻¹, ..., R_{log(1/ε)+1}⁻¹ gates which are prepared in the real calculation state yields about 1/2(log(1/ε))². Hence, the count of quantum states used in 1 step is no more than 1/4(log(1/ε))². Therefore, the count of quantum states that should be prepared is about 3/4d_{T}log(1/ε)³.

### (3) Post-Process State

One R₂Rⱼ⁻¹ gate is consumed within at least a 2-step interval, just as in the pre-process state. Accordingly, a count of R₂Rⱼ⁻¹ gates used in 1 step can be estimated to be no more than 1/2. Therefore, if the quantum states to be used by the R₂Rⱼ⁻¹ gate are stored for about 3/2d_{T}log(1/ε) times of operation, the post-process state is immediately executable. Namely, the count of quantum states that should be prepared is about 3/2d_{T(}log(1/ε))².

From the foregoing, the count of quantum states that should be prepared includes, as the major term, (2) the count of quantum states in the real calculation state. Namely, the count of quantum states that should be prepared is about 3/4d_{T}(log(1/ε))³.

The operation of the approximate quantum Fourier transform device 10 according to Embodiment 1 will be described in detail with referring to Fig. 3.

In the flowchart of Fig. 3 and its explanation, concerning gate application, a symbol indicating an application number is employed. First, where application of gate to [j] is mentioned, a quantum gate for 1 quantum bit is applied to a number-j quantum bit. Where application of control NOT gate to [j, k] is mentioned, a control NOT gate whose control bit is a number-j quantum bit and whose target bit is a number-k quantum bit is applied. Regarding [j, k] appearing in the flowchart of Fig. 3 and its explanation, if j or k does not fall within a range of 1 or more and n or less which is a range of the quantum bit number, [j, k] is considered to be processing completed. About an element [j, k] that satisfies j ≥ k, this element [j, k] is also considered processing completed.

A process of step S201 corresponds to a process of step S101 of Fig. 2. Processes of step S202 and step S203 correspond to a process of step S102 of Fig. 2. Processes of step S204 and subsequent steps correspond to the process of loop 1 of Fig. 2.

### (Step S201: Quantum State Storing Process)

The quantum state storage unit 22 calculates and stores a plurality of quantum states in advance.
(1) Regarding the pre-process state, the quantum state storage unit 22 stores a quantum state corresponding to a gate required by a quantum bit whose quantum bit number j satisfies 2 ≤ j ≤ min(n, 3/2d_{T}log(1/ε) + 1). Specifically, the quantum state storage unit 22 stores a quantum state required by the R₂R_{min(j+1, log(1/ε) + 1)}⁻¹ gate which is used by the individual quantum bit j.
(2) Regarding the real calculation state, the quantum state storage unit 22 stores all of the quantum states that should be prepared by a 3/2d_{T}log(1/ε) group being a group of R₃⁻¹, R₄⁻¹, ... R_{log(1/ε) + 1}⁻¹ gates.
(3) Regarding the post-process state, the quantum state storage unit 22 stores a quantum state corresponding to a gate required by a quantum bit whose quantum bit number j satisfies 1 ≤ j ≤ min(n, 3/2d_{T}log(1/ε)). Specifically, the quantum state storage unit 22 stores a quantum state required by the R₂R_{min(n-j+2, log(1/ε) + 1})⁻¹ gate which is used by the individual quantum bit j.

The above quantum states are generated by the state calculation unit 24 using the T gates generated by the T-gate generation unit 23.

### (Step S202: Initial Value Assigning Process)

The real calculation unit 21 provides an initial value of an executable phase gate. Here, the real calculation unit 21 provides, as the initial value of the phase gate, [1, 2] to a suffix set S.

### (Step S203: First Pre-Process)

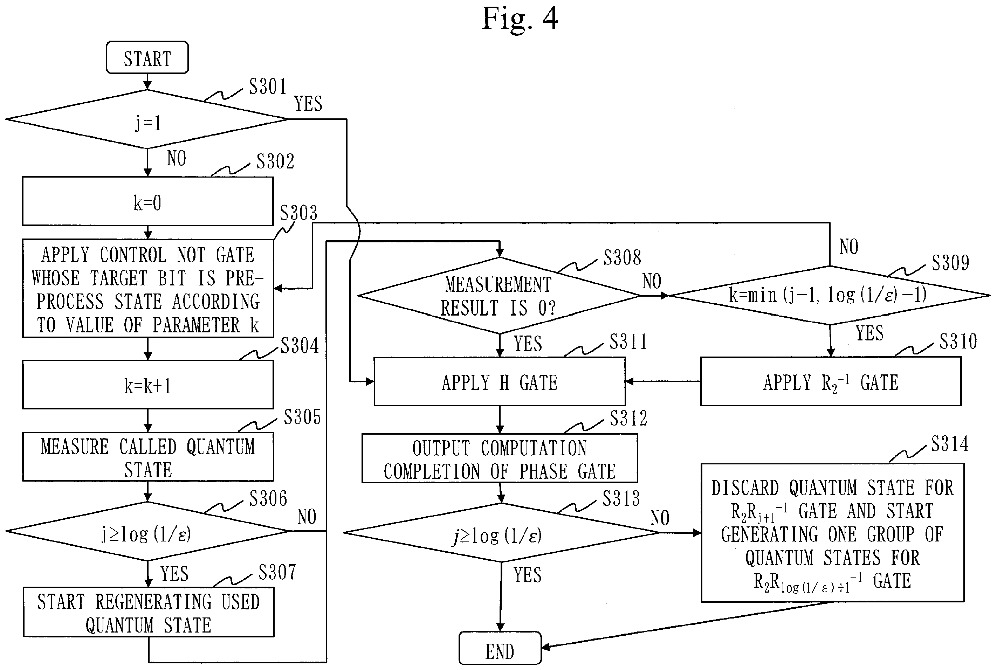

The real calculation unit 21 carries out on a number-1 quantum bit a pre-process which uses (1) the pre-process state. Specific processing will be described later with referring to Fig. 4.

Subsequently, the real calculation unit 21 executes approximate QFT. The real calculation unit 21 executes loop 2 (processes of step S204 through step S214) repeatedly for each element s of the set S.

Operations concerning the individual elements s can be executed in a parallel manner. Particularly, in the present case, it is assumed that all elements s which are contained in the set S and are in an executable state are executed in a parallel manner. That is, the real calculation unit 21 treats each element s in the executable state as an object element s, and executes the processes of step S204 through step S214 repeatedly in a parallel manner for all object elements s.

### (Step S204: Element Assigning Process)

The real calculation unit 21 assigns a first component of the object element s to j and a second component of the object element s to k.

### (Step S205: Wait Judging Process)

The real calculation unit 21 judges whether or not processes of both of an element [j - 1, k] and an element [j, k - 1] are completed. If the both processes are completed, the real calculation unit 21 shifts the processing to step S206. If at least one or the other of the processes is not completed, the real calculation unit 21 shifts the processing back to the beginning of loop 2.

### (Step S206: First Control NOT Gate Application Process)

The real calculation unit 21 applies a control NOT gate whose control bit is a number-j quantum bit and whose target bit is a number-k quantum bit.

### (Step S207: Real Calculation Process)

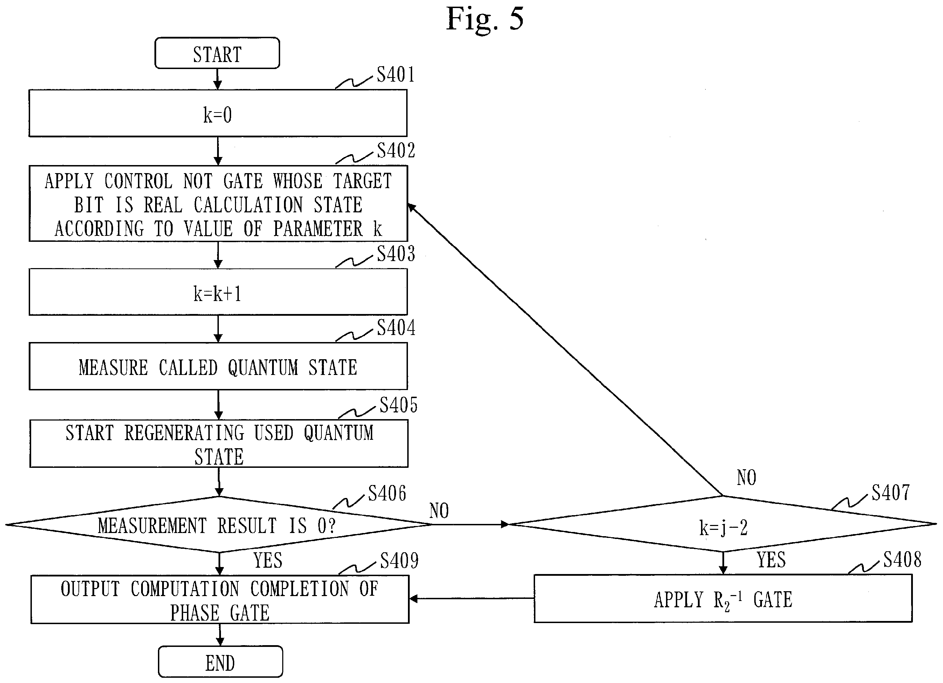

The real calculation unit 21 applies a phase gate R_{k,j+2}⁻¹ to the number-k quantum bit with using (2) the real calculation state. Specific processing will be described later with referring to Fig. 5.

### (Step S208: Second Control NOT Gate Application Process)

The real calculation unit 21 applies a control NOT gate whose control bit is the number-j quantum bit and whose target bit is the number-k quantum bit.

Then, the real calculation unit 21 makes an element [j, k] processing completed. Specifically, the real calculation unit 21 outputs calculation completion of the element [j, k] to the progress output unit 32. Upon reception of the output of calculation completion, the progress output unit 32 displays a calculation completed portion of the approximate QFT to the display unit 300.

### (Step S209: k-Completion Judging Process)

The real calculation unit 21 judges whether use of the number-k quantum bit as a target bit is completed. Specifically, if k - j = 1 is established, the real calculation unit 21 judges that use of the number-k quantum bit as the target bit is completed. If k - j = 1 is not established, the real calculation unit 21 judges that use of the number-k quantum bit as the target bit is not completed.

When use of the number-k quantum bit as the target bit is completed, the real calculation unit 21 shifts the processing to step S210. When use of the number-k quantum bit as the target bit is not completed, the real calculation unit 21 shifts the processing to step S211.

### (Step S210: Second Pre-Process)

The real calculation unit 21 carries out a pre-process on the number-k quantum bit with using (1) the pre-process state. Specific processing will be described later with referring to Fig. 4 just as the process of step S203 was.

### (Step S211: First Element Adding Process)

The real calculation unit 21 adds an element [j + 1, k] to the set S.

### (Step S212: j-Completion Judging Process)

The real calculation unit 21 judges, about the number-j quantum bit, whether it or not a condition is satisfied that computation using this quantum bit as a control bit is completed and that the post-process is not completed. When k - j = log(1/ε) - 1 or k = n, this signifies that about the number-j quantum bit, computation using this quantum bit as the control bit is completed.

If the condition is satisfied, the real calculation unit 21 shifts the processing to step S213. If the condition is not satisfied, the real calculation unit 21 shifts the processing to step S214.

### (Step S213: Post-Process)

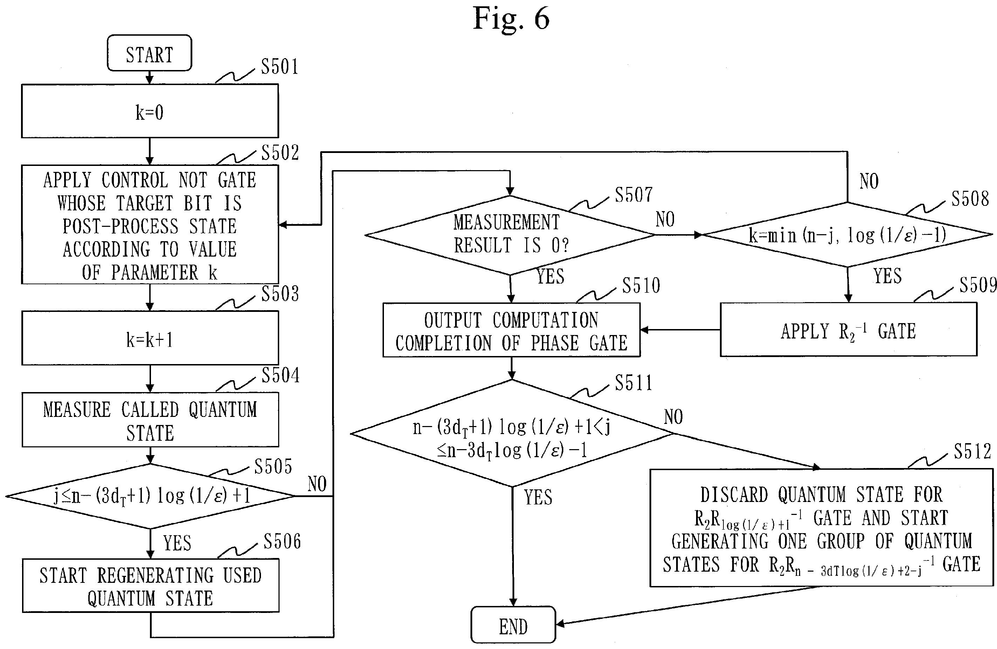

The real calculation unit 21 carries out on the number-j quantum bit a post-process which uses (3) the post-process sate. Specific processing will be described later with referring to Fig. 6.

### (Step S214: Second Element Adding Process)

The real calculation unit 21 adds an element [j, k + 1] to the set S.

### (Step S215: All-Element Completion Judging Process)

The real calculation unit 21 judges whether or not all elements of the set S are processing completed.

If all the elements are processing completed, the real calculation unit 21 ends the processing. If an element that is not processing completed remains, the real calculation unit 21 shifts the processing back to the beginning of second loop.

The pre-process (step S203 and step S210 of Fig. 3) according to Embodiment 1 will be described with referring to Fig. 4.

Assume that in the flowchart of Fig. 4 and its explanation, parameters j and ε are determined externally. Particularly, the parameter j expresses a number of a quantum bit to be subjected to the pre-process, and is independent of the suffix j appearing in the former explanation. An internal variable k is also independent of the former explanation.

### (Step S301: First j Judging Process)

The real calculation unit 21 judges whether or not parameter j = 1 is established.

If parameter j = 1 is established, the real calculation unit 21 shifts the processing to step S311. If parameter j = 1 is not established, the real calculation unit 21 shifts the processing to step S302.

### (Step S302: k Initialization Process)

The real calculation unit 21 assigns an initial value 0 to the parameter k. The parameter k expresses a cumulative value of the number of times of measurement.

### (Step S303: Gate Application Process)

The real calculation unit 21 calls (1) the pre-process state according to the value of the parameter k and stored in the quantum state storage unit 22. Specifically, the real calculation unit 21 calls (1) the pre-process state indicated by Expression 17. $\left|0\right〉 + exp \left(\frac{2 πi}{{2}^{2 - k}}-\frac{2 πi}{{2}^{min \left(j+1,log\left(1/ε\right)+1\right) - k}}\right) \left|1\right〉$

Then, the real calculation unit 21 applies a control NOT gate whose control bit is the number-j quantum bit and whose target bit is a called quantum state (pre-process state).

### (step S304: Number of Times of Measurement Cumulation Process)

The real calculation unit 21 adds 1 to the parameter k.

### (Step S305: Measurement Process)

The real calculation unit 21 causes the measurement unit 31 to measure the quantum state called in step S303.

### (Step S306: Second j Judging Process)

The real calculation unit 21 judges whether or not parameter j ≥ log(1/ε) is established.

If parameter j ≥ log(1/ε) is established, the real calculation unit 21 shifts the processing to step S307. If parameter j ≥ log(1/ε) is not established, the real calculation unit 21 shifts the processing to step S308.

### (Step S307: Quantum State Regeneration Process)

The quantum state storage unit 22 starts regenerating the quantum state called and used in step S303. In step S307, merely quantum state regeneration is started. The processing is shifted to step S308 without waiting for completion of quantum state generation.

### (Step S308: Measurement Result Judging Process)

The real calculation unit 21 judges whether or not a result of measurement in step S305 is 0.

If the measurement result is 0, the real calculation unit 21 shifts the processing to step S311. If the measurement result is not 0, the real calculation unit 21 shifts the processing to step S309.

### (Step S309: Number of Times of Measurement Judging Process)

The real calculation unit 21 judges whether or not the number of times of measurement reaches a criterion number of times. The criterion number of times is min(j - 1, log(1/ε) - 1).

If the number of times of measurement reaches the criterion number of times, the real calculation unit 21 shifts the processing to step S310. If the number of times of measurement does not reach the criterion number of times, the real calculation unit 21 shifts the processing back to step S303.

### (Step S310: R₂⁻¹ Gate Application Process)

The real calculation unit 21 applies the R₂⁻¹ gate indicated by Expression 18. ${R}_{2}^{- 1} = \left[\begin{matrix}1 & 0 \\ 0 & - i\end{matrix}\right]$

### (Step S311: H Gate Application Process)

The real calculation unit 21 applies an H gate (Hadamard gate).

### (Step S312: Progress Output Process)

The real calculation unit 21 outputs calculation completion of the phase gate to the progress output unit 32. Upon reception of the output of calculation completion, the progress output unit 32 displays a calculation completed portion of the approximate QFT to the display unit 300.

### (Step S313: Third j Judging Process)

The real calculation unit 21 judges whether or not parameter j ≥ log(1/ε) is established.

If parameter j ≥ log(1/ε) is established, the real calculation unit 21 ends the processing. If parameter j ≥ log(1/ε) is not established, the real calculation unit 21 shifts the processing to step S314.

### (Step S314: Quantum State Update Process)

The quantum state storage unit 22 discards a quantum state for the R₂Rⱼ₊₁⁻¹ gate. Also, the quantum state storage unit 22 starts generating one group of quantum states for the R₂R_{log(1/ε)+1}⁻¹ gate. In step S314, merely quantum state regeneration is started. The processing shifts to an end state without waiting for completion of quantum state generation.

The real calculation process (step S207 of Fig. 3) according to Embodiment 1 will be described with referring to Fig. 5.

The flowchart of Fig. 5 and its explanation indicate how the Rⱼ⁻¹ gate is executed. The suffix j is independent of j appearing in the former explanation. An internal variable k is also independent of the former explanation.

### (Step S401: k Initialization Process)

The real calculation unit 21 assigns an initial value 0 to the parameter k. The parameter k expresses a cumulative value of the number of times of measurement.

### (Step S402: Gate Application Process)

The real calculation unit 21 calls (2) the real calculation state according to the value of the parameter k and stored in the quantum state storage unit 22. Specifically, the real calculation unit 21 calls (2) the real calculation state indicated by Expression 19. $\left|0\right〉 + exp \left(-\frac{2 π i}{{2}^{j - k}}\right) \left|1\right〉$

Then, the real calculation unit 21 applies a control NOT gate whose control bit is the number-j quantum bit and whose target bit is a called quantum state (real calculation state).

### (step S403: Number of Times of Measurement Cumulation Process)

The real calculation unit 21 adds 1 to the parameter k.

### (Step S404: Measurement Process)

The real calculation unit 21 causes the measurement unit 31 to measure the quantum state called in step S402.

### (Step S405: Quantum State Regeneration Process)

The quantum state storage unit 22 starts regenerating the quantum state called and used in step S402. In step S405, merely quantum state regeneration is started. The processing is shifted to step S406 without waiting for completion of quantum state generation.

### (Step 406: Measurement Result Judging Process)

The real calculation unit 21 judges whether or not a result of measurement in step S404 is 0.

If the measurement result is 0, the real calculation unit 21 shifts the processing to step S409. If the measurement result is not 0, the real calculation unit 21 shifts the processing to step S407.

### (Step S407: Number of Times of Measurement Judging Process)

The real calculation unit 21 judges whether or not the number of times of measurement reaches a criterion number of times. The criterion number of times is j - 2.

If the number of times of measurement reaches the criterion number of times, the real calculation unit 21 shifts the processing to step S408. If the number of times of measurement does not reach the criterion number of times, the real calculation unit 21 shifts the processing back to step S402.

### (Step S408: R₂⁻¹ Gate Application Process)

The real calculation unit 21 applies the R₂⁻¹ gate indicated by Expression 20. ${R}_{2}^{- 1} = \left[\begin{matrix}1 & 0 \\ 0 & - i\end{matrix}\right]$

### (Step S409: Progress Output Process)

The real calculation unit 21 outputs calculation completion of the phase gate to the progress output unit 32. Upon reception of the output of calculation completion, the progress output unit 32 displays a calculation completed portion of the approximate QFT to the display unit 300.

The post-process (step S213 of Fig. 3) according to Embodiment 1 will be described with referring to Fig. 6.

Assume that in the flowchart of Fig. 6 and its explanation, parameters j and ε are determined externally. Particularly, the parameter j expresses a number of a quantum bit to be subjected to the post-process, and is independent of the suffix j appearing in the former explanation. An internal variable k is also independent of the former explanation.

### (Step S501: k Initialization Process)

The real calculation unit 21 assigns an initial value 0 to the parameter k. The parameter k expresses a cumulative value of the number of times of measurement.

### (Step S502: Gate Application Process)

The real calculation unit 21 calls (3) the post-process state according to the value of the parameter k and stored in the quantum state storage unit 22. Specifically, the real calculation unit 21 calls (3) the post-process state indicated by Expression 21. $\left|0\right〉 + exp \left(\frac{2 π i}{{2}^{2 - k}}-\frac{2 π i}{{2}^{min \left(n-j+2,log\left(1/ε\right)+1\right) - k}}\right) \left|1\right〉$

Then, the real calculation unit 21 applies a control NOT gate whose control bit is the number-j quantum bit and whose target bit is the called quantum state (post-process state).

### (step S503: Number of Times of Measurement Cumulation Process)

The real calculation unit 21 adds 1 to the parameter k.

### (Step S504: Measurement Process)

The real calculation unit 21 causes the measurement unit 31 to measure the quantum state called in step S502.

### (Step S505: First j Judging Process)

The real calculation unit 21 judges whether or not parameter j ≤ n - (3d_{T} + 1)log(1/ε) + 1 is established.

If parameter j ≤ n - (3d_{T} + 1)log(1/ε) + 1 is established, the real calculation unit 21 shifts the processing to step S506. If parameter j ≤ n - (3d_{T} + 1)log(1/ε) + 1 is not established, the real calculation unit 21 shifts the processing to step S507.

### (Step S506: Quantum State Regeneration Process)

The quantum state storage unit 22 starts regenerating the quantum state called and used in step S502. In step S502, merely quantum state regeneration is started. The processing is shifted to step S507 without waiting for completion of quantum state generation.

### (Step S507: Measurement Result Judging Process)

The real calculation unit 21 judges whether or not a result of measurement in step S504 is 0.

If the measurement result is 0, the real calculation unit 21 shifts the processing to step S510. If the measurement result is not 0, the real calculation unit 21 shifts the processing to step S508.

### (Step S508: Number of Times of Measurement Judging Process)

The real calculation unit 21 determines judges or not the number of times of measurement reaches a criterion number of times. The criterion number of times is min(n - j, log(1/ε) - 1).

If the number of times of measurement reaches the criterion number of times, the real calculation unit 21 shifts the processing to step S509. If the number of times of measurement does not reach the criterion number of times, the real calculation unit 21 shifts the processing back to step S502.

### (Step S509: R₂⁻¹ Gate Application Process)

The real calculation unit 21 applies the R₂⁻¹ gate indicated by Expression 22. ${R}_{2}^{- 1} = \left[\begin{matrix}1 & 0 \\ 0 & - i\end{matrix}\right]$

### (Step S510: Progress Output Process)

The real calculation unit 21 outputs calculation completion of the phase gate to the progress output unit 32. Upon reception of the output of calculation completion, the progress output unit 32 displays a calculation completed portion of the approximate QFT to the display unit 300.

### (Step S511: Second j Judging Process)

The real calculation unit 21 judges whether or not the parameter j satisfies n - (3dr + 1)log(1/ε) + 1 < j ≤ n - 3d_{T}log(1/ε) - 1.

If the parameter j satisfies the inequality, the real calculation unit 21 shifts the processing to step S512. If the parameter j does not satisfy the inequality, the real calculation unit 21 ends the processing.

### (Step S512: Quantum State Update Process)

The quantum state storage unit 22 discards a quantum state for the R₂R_{log(1/ε)+1}⁻¹ gate. Also, the quantum state storage unit 22 starts generating a quantum state for the R₂R_{n - 3dTlog(1/ε)+2-j}⁻¹ gate. Note that dT expresses d_{T}. In step S512, merely quantum state regeneration is started. The processing shifts to an end state without waiting for completion of quantum state generation.

### *** Effect of Embodiment 1 ***

As has been described above, the approximate quantum Fourier transform device 10 according to Embodiment 1 generates and stores in advance a quantum state about a phase gate which is made by the quantum state storage unit 22 to be immediately executable. Then, the real calculation unit 21 applies the phase gate by using the quantum state stored in the quantum state storage unit 22.

Hence, a phase gate that conventionally required gate execution of about 3log(1/ε) steps becomes executable with a gate having an expected value of 2 steps. Accordingly, different from the conventional case, in approximate QFT to be executed by the approximate quantum Fourier transform device 10 according to Embodiment 1, each phase gate becomes executable within a calculation time not dependent on the approximation accuracy. Therefore, the approximate quantum Fourier transform device 10 can carry out approximate QFT at an extremely higher speed than with the conventional technique.

The approximate quantum Fourier transform device 10 according to Embodiment 1 further uses about (3/4)d_{T}(log(1/ε))³ quantum bits in addition to n of quantum bits used in approximate QFT. In the above description, the approximation accuracy ε of approximate QFT is assumed to be ε to n^{-a} (a is a certain constant). On this assumption, the additional quantum bit count becomes about ((3a³)/4)d_{T}(logn)³. In a large-scale calculation where n is extremely large, ((3a³)/4)d_{T}(logn)³ << n is established. Hence, in the approximate QFT realized by the approximate quantum Fourier transform device 10, the quantum bit count of the real calculation unit 21 is the main term of the quantum bit count. Therefore, the quantum bits of the quantum state storage unit 22 do not largely affect the quantum bit count required by the approximate quantum Fourier transform device 10.

### *** Other Configurations ***

### < Modification 1 >

In Embodiment 1, the individual functional constituent elements are implemented by software. However, Modification 1 is possible in which the individual functional constituent elements are implemented by hardware. Modification 1 will be described regarding its difference from Embodiment 1.

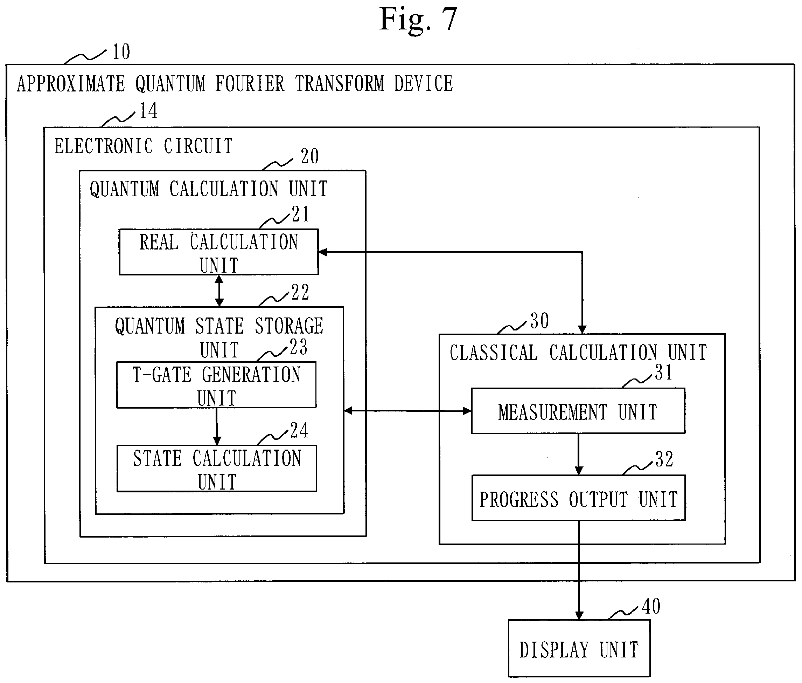

A configuration of an approximate quantum Fourier transform device 10 according to Modification 1 will be described with referring to Fig. 7.

When the individual functional constituent elements are implemented by software, the approximate quantum Fourier transform device 10 is provided with an electronic circuit 14 instead of the processor 11, the memory 12, and the storage 13. The electronic circuit 14 is a dedicated circuit that implements functions of the individual functional constituent elements and the functions of the memory 12 and storage 13.

The electronic circuit 14 is assumed to be a single circuit, a composite circuit, a programmed processor, a parallel-programmed processor, a logic IC, a GA, an ASIC, or an FPGA. Note that GA is an abbreviation for Gate Array, ASIC for Application Specific Integrated Circuit, and FPGA for Field-Programmable Gate Array.

The functional constituent elements may be implemented by one electronic circuit 14, or may be implemented by a plurality of electronic circuits 14 by distribution.

### < Modification 2 >

Modification 2 may be possible in which some of the functional constituent elements are implemented by hardware and the remaining functional constituent elements are implemented by software.

The processor 11, the memory 12, the storage 13, and the electronic circuit 14 are called processing circuitry. That is, the functions of the individual functional constituent elements are implemented by processing circuitry.

### Reference Signs List

10: approximate quantum Fourier transform device; 11: processor; 12: memory; 13: storage; 14: electronic circuit; 20: quantum calculation unit; 21: real calculation unit; 22: quantum state storage unit; 23: T-gate generation unit; 24: state calculation unit; 30: classical calculation unit; 31: measurement unit; 32: progress output unit; 40: display unit.

## Claims

1. An approximate quantum Fourier transform device (10) comprising:
a real calculation unit (21) configured to perform approximate quantum Fourier transform by converting a state of a quantum bit; and
a quantum state storage unit (22) configured to store a plurality of quantum states to be used by the real calculation unit,
the real calculation unit being configured to call and use from the plurality of quantum states stored in the quantum state storage unit, a quantum state necessary for conversion,
the real calculation unit being configured to cause the quantum bit to transition in turn between: a computation state a where computation processing is performed on the quantum bit as a target bit of control computation; and a computation state b where computation processing is performed on the quantum bit as a control bit of the control computation,
the quantum state storage unit being configured to store, about a quantum bit to be made immediately executable, quantum states which are: a pre-process state used to correct phase displacement of when processing of the computation state a is ended; a real calculation state used in processing of the computation state b; and a post-process state used to correct phase displacement of when the processing of the computation state b is ended,
wherein the real calculation unit is configured to apply a phase gate, an Hadamard gate, and a control NOT gate to the quantum bit, and when applying the phase gate, call and use the quantum state stored in the quantum state storage unit,
wherein the quantum bit to be made immediately executable is a quantum bit needed in 3d_{T}log(1/ε) steps where 1 step expresses a total time of a time taken for executing a control NOT gate once and a time taken for executing measurement of the quantum state once, d_{T} expresses a time needed to generate a T gate, and ε expresses an approximation accuracy.

2. The approximate quantum Fourier transform device (10) according to claim 1, wherein
the quantum state storage unit is configured to discard a quantum state about a quantum bit no longer needed to be immediately executable, and generate and store a quantum state about a quantum bit needed to be immediately executable, in accordance with operation of the real calculation unit.

3. The approximate quantum Fourier transform device (10) according to claim 1 or 2, wherein
the quantum state storage unit is configured to regenerate and store a quantum state about a quantum bit having decayed due to the operation of the real calculation unit (21) and still needed to be immediately executable.

4. The approximate quantum Fourier transform device (10) according to any one of claims 1 to 3,
wherein due to progress of a process of converting the state of the quantum bit, when execution of a process of converting a state about a new quantum bit becomes possible, the real calculation unit (21) starts a process of converting the state about the new quantum bit.

5. An approximate quantum Fourier transform method comprising:
with a real calculation unit (21) in an approximate quantum Fourier transform device (10), performing approximate quantum Fourier transform by converting a state of a quantum bit; and
with a quantum state storage unit (22) in the approximate quantum Fourier transform device, storing a plurality of quantum states to be used by the real calculation unit,
the real calculation unit calling and using, from the plurality of quantum states stored in the quantum state storage unit, a quantum state necessary for conversion,
the real calculation unit causing the quantum bit to transition in turn between: a computation state a where computation processing is performed on the quantum bit as a target bit of control computation; and a computation state b where computation processing is performed on the quantum bit as a control bit of the control computation,
the quantum state storage unit storing, about a quantum bit to be made immediately executable, quantum states which are: a pre-process state used to correct phase displacement of when processing of the computation state a is ended; a real calculation state used in processing of the computation state b; and a post-process state used to correct phase displacement of when the processing of the computation state b is ended,
wherein the approximate quantum Fourier transform method further comprises:
with the real calculation unit, applying a phase gate, an Hadamard gate, and a control NOT gate to the quantum bit, and when applying the phase gate, calling and using the quantum state stored in the quantum state storage unit,
wherein the quantum bit to be made immediately executable is a quantum bit needed in 3d_{T}log(1/ε) steps where 1 step expresses a total time of a time taken for executing a control NOT gate once and a time taken for executing measurement of the quantum state once, d_{T} expresses a time needed to generate a T gate, and ε expresses an approximation accuracy.

6. The approximate quantum Fourier transform method according to claim 5, further comprising:
with the quantum state storage unit, discarding a quantum state about a quantum bit no longer needed to be immediately executable, and generating and storing a quantum state about a quantum bit needed to be immediately executable, in accordance with operation of the real calculation unit.

7. The approximate quantum Fourier transform method according to claim 5 or 6, further comprising:
with the quantum state storage unit, regenerating and storing a quantum state about a quantum bit having decayed due to the operation of the real calculation unit and still needed to be immediately executable.

8. An approximate quantum Fourier transform program comprising instructions which, when the program is executed by the approximate quantum Fourier transform device according to any one of claims 1 to 4, cause the device to perform the approximate quantum Fourier transform method according to any one of claims 5 to 7.

## Patentansprüche

1. Approximative-Quanten-Fouriertransformation-Einrichtung (10), umfassend:
eine eigentliche Recheneinheit (21), die eingerichtet ist, eine approximative Quanten-Fouriertransformation durchzuführen, indem ein Zustand eines Quantenbits umgewandelt wird; und
eine Quantenzustand-Speichereinheit (22), die eingerichtet ist, eine Vielzahl von Quantenzuständen zu speichern, die von der eigentlichen Recheneinheit verwendet werden sollen,
wobei die eigentliche Recheneinheit eingerichtet ist, aus der Vielzahl von in der Quantenzustand-Speichereinheit gespeicherten Quantenzuständen einen für die Umwandlung erforderlichen Quantenzustand abzurufen und zu verwenden,
wobei die eigentliche Recheneinheit eingerichtet ist, das Quantenbit zu veranlassen, der Reihe nach zu wechseln zwischen: einem Berechnungszustand a, in dem die Berechnungsverarbeitung an dem Quantenbit als Zielbit einer kontrollierten Berechnung durchgeführt wird; und einem Berechnungszustand b, in dem die Berechnungsverarbeitung an dem Quantenbit als Steuerbit der kontrollierten Berechnung durchgeführt wird,
wobei die Quantenzustand-Speichereinheit eingerichtet ist, etwa ein Quantenbit zu speichern, das sofort ausführbar gemacht werden soll, wobei es sich bei den Quantenzuständen um folgende handelt: einen Vorverarbeitungszustand, der zur Korrektur der Phasenverschiebung verwendet wird, wenn eine Verarbeitung des Berechnungszustands a beendet ist; einen eigentlichen Rechenzustand, der bei der Verarbeitung des Berechnungszustands b verwendet wird; und einen Nachverarbeitungszustand, der zur Korrektur der Phasenverschiebung verwendet wird, wenn die Verarbeitung des Berechnungszustands b beendet ist,
wobei die eigentliche Recheneinheit eingerichtet ist, ein Phasengatter, ein Hadamard-Gatter und ein kontrolliertes NOT-Gatter auf das Quantenbit anzuwenden, und bei der Anwendung des Phasengatters den in der Quantenzustand-Speichereinheit gespeicherten Quantenzustand abzurufen und zu verwenden,
wobei das sofort ausführbar zu machende Quantenbit ein Quantenbit ist, das in 3d_{T}log(1/ε) Schritten benötigt wird, wobei 1 Schritt eine Gesamtzeit einer Zeit ausdrückt, die für eine einmalige Ausführung eines kontrollierten NOT-Gatters genommen wird und eine Zeit, die für eine einmalige Ausführung einer Messung des Quantenzustands genommen wird, d_{T} eine Zeit ausdrückt, die zur Erzeugung eines T-Gatters benötigt wird und ε eine Näherungsgenauigkeit ausdrückt.

2. Approximative-Quanten-Fouriertransformation-Einrichtung (10) nach Anspruch 1, wobei
die Quantenzustand-Speichereinheit eingerichtet ist, einen Quantenzustand etwa eines Quantenbits, der nicht mehr für die sofortige Ausführung benötigt wird, zu verwerfen und einen Quantenzustand etwa eines Quantenbits, der für die sofortige Ausführung benötigt wird, entsprechend dem Betrieb der eigentlichen Recheneinheit zu erzeugen und zu speichern.

3. Approximative-Quanten-Fouriertransformation-Einrichtung (10) nach Anspruch 1 oder 2, wobei
die Quantenzustand-Speichereinheit eingerichtet ist, einen Quantenzustand eines Quantenbits, der aufgrund des Betriebs der eigentlichen Recheneinheit (21) zerfallen ist und dennoch sofort ausführbar sein muss, wiederherzustellen und zu speichern.

4. Approximative-Quanten-Fouriertransformation-Einrichtung (10) nach einem der Ansprüche 1 bis 3,
wobei die eigentliche Recheneinheit (21) aufgrund eines Fortschritts eines Prozesses des Umwandelns des Zustands des Quantenbits, wenn eine Ausführung eines Prozesses des Umwandelns eines Zustands etwa eines neuen Quantenbits möglich wird, einen Prozess des Umwandelns des Zustands etwa des neuen Quantenbits beginnt.

5. Approximative-Quanten-Fouriertransformation-Verfahren, umfassend:
mit einer eigentlichen Recheneinheit (21) in einer Approximative-Quanten-Fouriertransformation-Einrichtung (10), Durchführen einer approximativen Quanten-Fouriertransformation, indem ein Zustand eines Quantenbits umgewandelt wird; und
mit einer Quantenzustand-Speichereinheit (22) in der Approximative-Quanten-Fouriertransformation-Einrichtung, Speichern einer Vielzahl von Quantenzuständen, die von der eigentlichen Recheneinheit verwendet werden sollen,
wobei die eigentliche Recheneinheit aus der Vielzahl von in der Quantenzustand-Speichereinheit gespeicherten Quantenzuständen einen für die Umwandlung erforderlichen Quantenzustand abruft und verwendet,
wobei die eigentliche Recheneinheit das Quantenbit veranlasst, der Reihe nach zu wechseln zwischen: einem Berechnungszustand a, in dem die Berechnungsverarbeitung an dem Quantenbit als Zielbit einer kontrollierten Berechnung durchgeführt wird; und einem Berechnungszustand b, in dem die Berechnungsverarbeitung an dem Quantenbit als Steuerbit der kontrollierten Berechnung durchgeführt wird,
wobei die Quantenzustand-Speichereinheit etwa ein Quantenbit speichert, das sofort ausführbar gemacht werden soll, wobei es sich bei den Quantenzuständen um folgende handelt: einen Vorverarbeitungszustand, der zur Korrektur der Phasenverschiebung verwendet wird, wenn eine Verarbeitung des Berechnungszustands a beendet ist; einen eigentlichen Rechenzustand, der bei der Verarbeitung des Berechnungszustands b verwendet wird; und einen Nachverarbeitungszustand, der zur Korrektur der Phasenverschiebung verwendet wird, wenn die Verarbeitung des Berechnungszustands b beendet ist,
wobei das Approximative-Quanten-Fouriertransformation-Verfahren ferner umfasst:
mit der eigentlichen Recheneinheit, Anwenden eines Phasengatters, eines Hadamard-Gatters und eines kontrollierten NOT-Gatters auf das Quantenbit, und bei der Anwendung des Phasengatters Abrufen und Verwenden des in der Quantenzustand-Speichereinheit gespeicherten Quantenzustands,
wobei das sofort ausführbar zu machende Quantenbit ein Quantenbit ist, das in 3d_{T}log(1/ε) Schritten benötigt wird, wobei 1 Schritt eine Gesamtzeit einer Zeit ausdrückt, die für eine einmalige Ausführung eines kontrollierten NOT-Gatters genommen wird und eine Zeit, die für eine einmalige Ausführung einer Messung des Quantenzustands genommen wird, d_{T} eine Zeit ausdrückt, die zur Erzeugung eines T-Gatters benötigt wird und ε eine Näherungsgenauigkeit ausdrückt.

6. Approximative-Quanten-Fouriertransformation-Verfahren nach Anspruch 5, ferner umfassend:
mit der Quantenzustand-Speichereinheit, Verwerfen eines Quantenzustands etwa eines Quantenbits, der nicht mehr für die sofortige Ausführung benötigt wird, und Erzeugen und Speichern eines Quantenzustands etwa eines Quantenbits, der für die sofortige Ausführung benötigt wird, entsprechend einem Betrieb der eigentlichen Recheneinheit.

7. Approximative-Quanten-Fouriertransformation-Verfahren nach Anspruch 5 oder 6, ferner umfassend:
mit der Quantenzustand-Speichereinheit, Wiederherstellen und Speichern eines Quantenzustands etwa eines Quantenbits, der aufgrund des Betriebs der eigentlichen Recheneinheit zerfallen ist und dennoch sofort ausführbar sein muss.

8. Approximative-Quanten-Fouriertransformation-Programm, umfassend Befehle, die, wenn das Programm von der Approximative-Quanten-Fouriertransformation-Einrichtung gemäß einem der Ansprüche 1 bis 4 ausgeführt wird, die Einrichtung veranlassen, das Approximative-Quanten-Fouriertransformation-Verfahren gemäß einem der Ansprüche 5 bis 7 durchzuführen.

## Revendications

1. Dispositif de transformée de Fourier quantique approximative (10) comprenant :
une unité de calcul réel (21) configurée pour mettre en œuvre une transformée de Fourier quantique approximative en convertissant un état d'un bit quantique ; et
une unité de stockage d'état quantique (22) configurée pour stocker une pluralité d'états quantiques devant être utilisés par l'unité de calcul réel,
l'unité de calcul réel étant configurée pour appeler et utiliser, à partir de la pluralité d'états quantiques stockés dans l'unité de stockage d'état quantique, un état quantique nécessaire à une conversion,
l'unité de calcul réel étant configurée pour amener le bit quantique à transiter à tour de rôle entre : un état de calcul a où un traitement de calcul est effectué sur le bit quantique en tant que bit cible d'un calcul de commande ; et un état de calcul b où un traitement de calcul est effectué sur le bit quantique en tant que bit de commande du calcul de commande,
l'unité de stockage d'état quantique étant configurée pour stocker, concernant un bit quantique à rendre immédiatement exécutable, des états quantiques qui sont : un état de pré-traitement utilisé pour corriger un déplacement de phase du moment où un traitement de l'état de calcul a est terminé ; un état de calcul réel utilisé dans un traitement de l'état de calcul b ; et un état de post-traitement utilisé pour corriger un déplacement de phase du moment où le traitement de l'état de calcul b est terminé,
dans lequel l'unité de calcul réel est configurée pour appliquer une porte de phase, une porte de Hadamard, et une porte NON commandée au bit quantique, et, lors de l'application de la porte de phase, appeler et utiliser l'état quantique stocké dans l'unité de stockage d'état quantique,
dans lequel le bit quantique à rendre immédiatement exécutable est un bit quantique nécessaire dans 3d_{T} log(1/ ε) étapes où 1 étape exprime un temps total d'un temps pris pour exécuter une porte NON commandée une fois et d'un temps pris pour exécuter une mesure de l'état quantique une fois, d_{T} exprime un temps nécessaire pour générer une porte T, et ε exprime une précision d'approximation.

2. Dispositif de transformée de Fourier quantique approximative (10) selon la revendication 1, dans lequel
l'unité de stockage d'état quantique est configurée pour éliminer un état quantique concernant un bit quantique n'ayant plus besoin d'être immédiatement exécutable, et générer et stocker un état quantique concernant un bit quantique ayant besoin d'être immédiatement exécutable, conformément au fonctionnement de l'unité de calcul réel.

3. Dispositif de transformée de Fourier quantique approximative (10) selon la revendication 1 ou 2, dans lequel
l'unité de stockage d'état quantique est configurée pour régénérer et stocker un état quantique concernant un bit quantique s'étant dégradé en raison du fonctionnement de l'unité de calcul réel (21) et ayant encore besoin d'être immédiatement exécutable.

4. Dispositif de transformée de Fourier quantique approximative (10) selon l'une quelconque des revendications 1 à 3,
dans lequel, en raison de la progression d'un processus de conversion de l'état du bit quantique, lorsque l'exécution d'un processus de conversion d'un état concernant un nouveau bit quantique devient possible, l'unité de calcul réel (21) commence un processus de conversion de l'état concernant le nouveau bit quantique.

5. Procédé de transformée de Fourier quantique approximative comprenant :
au moyen d'une unité de calcul réel (21) dans un dispositif de transformée de Fourier quantique approximative (10), mettre en œuvre une transformée de Fourier quantique approximative en convertissant un état d'un bit quantique ; et
au moyen d'une unité de stockage d'état quantique (22) dans le dispositif de transformée de Fourier quantique approximative, stocker une pluralité d'états quantiques devant être utilisés par l'unité de calcul réel,
l'unité de calcul réel appelant et utilisant, à partir de la pluralité d'états quantiques stockés dans l'unité de stockage d'état quantique, un état quantique nécessaire à une conversion,
l'unité de calcul réel amenant le bit quantique à transiter à tour de rôle entre : un état de calcul a où un traitement de calcul est effectué sur le bit quantique en tant que bit cible d'un calcul de commande ; et un état de calcul b où un traitement de calcul est effectué sur le bit quantique en tant que bit de commande du calcul de commande,
l'unité de stockage d'état quantique stockant, concernant un bit quantique à rendre immédiatement exécutable, des états quantiques qui sont : un état de pré-traitement utilisé pour corriger un déplacement de phase du moment où un traitement de l'état de calcul a est terminé ; un état de calcul réel utilisé dans un traitement de l'état de calcul b ; et un état de post-traitement utilisé pour corriger un déplacement de phase du moment où le traitement de l'état de calcul b est terminé,
dans lequel le procédé de transformée de Fourier quantique approximative comprend en outre :
au moyen de l'unité de calcul réel, appliquer une porte de phase, une porte de Hadamard, et une porte NON commandée au bit quantique, et, lors de l'application de la porte de phase, appeler et utiliser l'état quantique stocké dans l'unité de stockage d'état quantique,
dans lequel le bit quantique à rendre immédiatement exécutable est un bit quantique nécessaire dans 3d_{T} log(1/ ε) étapes où 1 étape exprime un temps total d'un temps pris pour exécuter une porte NON commandée une fois et d'un temps pris pour exécuter une mesure de l'état quantique une fois, d_{T} exprime un temps nécessaire pour générer une porte T, et ε exprime une précision d'approximation.

6. Procédé de transformée de Fourier quantique approximative selon la revendication 5, comprenant en outre :
au moyen de l'unité de stockage d'état quantique, éliminer un état quantique concernant un bit quantique n'ayant plus besoin d'être immédiatement exécutable, et générer et stocker un état quantique concernant un bit quantique ayant besoin d'être immédiatement exécutable, conformément au fonctionnement de l'unité de calcul réel.

7. Procédé de transformée de Fourier quantique approximative selon la revendication 5 ou 6, comprenant en outre :
au moyen de l'unité de stockage d'état quantique, régénérer et stocker un état quantique concernant un bit quantique s'étant dégradé en raison du fonctionnement de l'unité de calcul réel et ayant encore besoin d'être immédiatement exécutable.

8. Programme de transformée de Fourier quantique approximative comprenant des instructions qui, lorsque le programme est exécuté par le dispositif de transformée de Fourier quantique approximative selon l'une quelconque des revendications 1 à 4, amènent le dispositif à mettre en œuvre le procédé de transformée de Fourier quantique approximative selon l'une quelconque des revendications 5 à 7.
